# EUROPEAN PATENT APPLICATION

(11) **EP 4 451 662 A2**
(43) Date of publication of application: **23.10.2024**
(21) Application number: 23743586.2
(22) Date of filing: 03.01.2023
(51) Int. Cl.: H04N 5/262, G06F 3/01, H04N 21/2187, G06T 13/20

(54) **VIDEO GENERATION METHOD, APPARATUS AND DEVICE, AND STORAGE MEDIUM**

(30) Priority: 20.01.2022 CN 202210067195
(71) Applicant: Lemon Inc., Grand Cayman, KY1-1205 (KY)
(72) Inventor: CHEN, Jingjie, Los Angeles, California 90066 (US); XU, Tianyang, Los Angeles, California 90066 (US); YANG, Siyao, Los Angeles, California 90066 (US); LI, Weikai, Los Angeles, California 90066 (US); CHEN, Zihao, Los Angeles, California 90066 (US); OU, Changhao, Los Angeles, California 90066 (US); ZHAO, Yixin, Culver City, California 90230 (US); LEE, Sang Hyup, Culver City, California 90230 (US); CHEN, Yiling, Los Angeles, California 90066 (US); YUE, Yi, Culver City, California 90230 (US); LIAO, Jie, Los Angeles, California 90066 (US); SHI, Shengchuan, Beijing 100086 (CN); ZHANG, Zixiong, Los Angeles, California 90066 (US); WANG, Quan, Los Angeles, California 90066 (US); SUN, Jian, Beijing 100086 (CN); WANG, Aoyu, Beijing 100086 (CN)
(74) Representative: Dentons UK and Middle East LLP
(86) International application number: PCT/SG2023/050002
(87) International publication number: WO 2023/140783

(57) **Abstract**

Provided in the present disclosure are a video generation method, apparatus and device, and a storage medium. The method comprises: when a trigger operation for a preset effect entry has been received, displaying, on a photographic page, a preset effect resource for a target POI which corresponds to a first user, wherein the preset effect resource comprises at least one first virtual object, and each first virtual object is displayed on the photographic page in a manner of moving towards the target POI; generating a second virtual object on the basis of a virtual object generation control on the photographic page; when a trigger operation for the second virtual object has been received, displaying the second virtual object on the photographic page in a manner of moving towards the target POI; and then generating a result video on the basis of the photographic page.

## Description

### CROSS-REFERENCE TO RELATED APPLICATIONS

The present application is based on and claims the priority to the Chinese Patent Application No. 202210067195. 6 filed on January 20, 2022, the disclosure of which is incorporated by reference herein in its entirety.

### TECHNICAL FIELD

The present disclosure relates to the field of data processing, and in particular, to a video generation method, apparatus and device, and a storage medium.

### BACKGROUND

Augmented reality (AR in short) technology is a kind of technology for fusing virtual information and real world information. . This technology loads a virtual object into the real world and interacted with the virtual objects by rendering the virtual object in real-time images, so that the real environment and the virtual object are presented on the same interface in real time.

### SUMMARY

In a first aspect, the present disclosure provides a video generation method, comprising:
in response to a trigger operation on a preset effect entry, displaying, on a shooting page, a preset effect resource for a target place of interest (POI) corresponding to a first user, wherein the preset effect resource comprises at least one first virtual object, the at least one first virtual object is displayed on the shooting page in a manner of moving towards the target POI, and the shooting page is provided with a virtual object generation control;
generating, based on the virtual object generation control, a virtual object corresponding to the first user as a second virtual object;
in response to a trigger operation on the second virtual object, presenting, on the shooting page, that the second virtual object is displayed in a manner of moving towards the target POI; and
generating a resulting video based on the shooting page.

In some embodiments, the generating, based on the virtual object generation control, a virtual object corresponding to the first user as a second virtual object, comprises:
in response to a trigger operation on the virtual object generation control, presenting a virtual object template on the shooting page, wherein the virtual object template comprises an information input area; and
after input information within the information input area has been received, based on the input information, generating the virtual object corresponding to the first user as the second virtual object.

In some embodiments, the method further comprises, before the generating a resulting video based on the shooting page:
in response to a trigger operation on a target first virtual object in the at least one first virtual object, presenting, on the shooting page, input information bound to the target first virtual object, wherein the target first virtual object has a correspondence with a second user, and the second user has a correspondence with the target POI.

In some embodiments, the method further comprises, after the presenting, on the shooting page, input information bounded to the target virtual object:
controlling, on the shooting page, that the target first virtual object is displayed in a manner of moving towards the target POI.

In some embodiments, the in response to a trigger operation on a preset effect entry, displaying, on a shooting page, a preset effect resource for a target place of interest (POI) corresponding to a first user, comprises:
determining, for the first user, the target POI from at least one POI, in response to the trigger operation on the preset effect entry, a distance between the target POI and the first user being the closest;
determining whether the distance between the first user and the target POI is less than a preset distance threshold; and
displaying a preset first effect resource on the shooting page, in response to determining that the distance between the first user and the target POI is not less than the preset distance threshold; otherwise, displaying a preset second effect resource on the shooting page, the preset first effect resource and the preset second effect resource being different preset effect resources.

In some embodiments, the method further comprises, after the displaying a preset first effect resource on the shooting page:
additionally displaying a third virtual object on the shooting page, in response to determining that the distance between the first user and the target POI is less than the preset distance threshold, the third virtual object belonging to the preset second effect resource.

In some embodiments, the preset first effect resource comprises the at least one first virtual object; and the preset second effect resource comprises the at least one first virtual object or a fourth virtual object.

In a second aspect, the present disclosure further provides a video generation apparatus, comprising:
a first display module configured to, in response to a trigger operation on a preset effect entry, display, on a shooting page, a preset effect resource for a target place of interest (POI) corresponding to a first user, wherein the preset effect resource comprises at least one first virtual object, the at least one first virtual object is displayed on the shooting page in a manner of moving towards the target POI, and the shooting page is provided with a virtual object generation control;
a first generation module configured to, generate, based on the virtual object generation control, a virtual object corresponding to the first user as a second virtual object;
a first presentation module configured to, in response to a trigger operation on the second virtual object, according to a preset first trajectory, present, on the shooting page, that the second virtual object is displayed in a manner of moving towards the target POI; and
a second generation module configured to generate a resulting video based on the shooting page.

In a third aspect, the present disclosure provides a computer-readable storage medium having therein stored instructions that, when run on a terminal device, cause the terminal device to implement the method described above.

In a fourth aspect, the present disclosure provides a device, comprising: a memory, a processor, and a computer program stored on the memory and executable on the processor, the processor, when executing the computer program, implementing the method described above.

In a fifth aspect, the present disclosure provides a computer program product, comprising computer programs/instructions which, when executed by a processor, implement the method described above.

In a sixth aspect, the present disclosure provides a computer program, comprising: instructions which, when executed by a processor, cause the processor to perform the video generation method according to any of the embodiments described above.

### BRIEF DESCRIPTION OF THE DRAWINGS

The accompanying drawings herein, which are incorporated in and constitute a part of this specification, illustrate embodiments consistent with the present disclosure and, together with the description, serve to explain the principles of the present disclosure.

In order to more clearly illustrate technical solutions in the embodiments of the present disclosure or the related art, the drawings required for use in the description of the embodiments or the related art will be briefly described below, and it is obvious that for one of ordinary skill in the art, other drawings can be obtained without paying creative labor.
Fig. 1 is a flow diagram of a video generation method according to some embodiments of the present disclosure;
Fig. 2 is a schematic diagram of a shooting page according to some embodiments of the present disclosure;
Fig. 3 is a schematic diagram of another shooting page according to some embodiments of the present disclosure;
Fig. 4 is a schematic diagram of yet another shooting page according to some embodiments of the present disclosure;
Fig. 5 is a schematic structural diagram of a video generation apparatus according to some embodiments of the present disclosure;
Fig. 6 is a schematic structural diagram of a video generation device according to some embodiments of the present disclosure.

### DETAILED DESCRIPTION

In order that the above objectives, features and advantages of the present disclosure may be more clearly understood, solutions of the present disclosure will be further described below. It should be noted that, without conflict, the embodiments of the present disclosure and features in the embodiments may be combined with each other.

In the following description, numerous specific details are set forth in order to provide a thorough understanding of the present disclosure, but the present disclosure may be implemented in other ways different from those described herein; and it is obvious that the embodiments in the description are only part of the embodiments of the present disclosure, rather than all of them.

As described above, with the continuous development of short video technology, requirements of users for video shooting functions are increasingly diversified, and therefore, how to support an AR effect while shooting a video is a technical problem to be solved urgently at present.

In order to solve the above technical problem, the present disclosure provides a video generation method, capable of presenting on a shooting page a preset effect resource corresponding to a target POI, and providing a virtual object generation function for a user, and generating a resulting video based on a shooting effect presented on the shooting page, so that the video shooting functions are enriched.
In order to meet diversified shooting function requirements of people, the present disclosure provides a video generation method, comprising: in response to receiving a trigger operation on a preset effect entry, displaying on a shooting page, a preset effect resource for a target POI corresponding to a first user, wherein the preset effect resource comprises at least one first virtual object, and the at least one first virtual object is displayed on the shooting page in a manner of moving towards the target POI; then, based on a virtual object generation control on the shooting page, generating a virtual object corresponding to the first user as a second virtual object, and in response to receiving a trigger operation on the second virtual object, presenting on the shooting page that, the second virtual object is displayed in a manner of moving towards the target POI, and then generating a resulting video based on the shooting page. It can be seen that, the embodiments of the present disclosure are capable of, presenting on a shooting page a preset effect resource for a target POI corresponding to a first user, and generating a second virtual object for the user, and generating a resulting video based on a shooting effect presented on the shooting page, so that the video shooting functions are enriched.

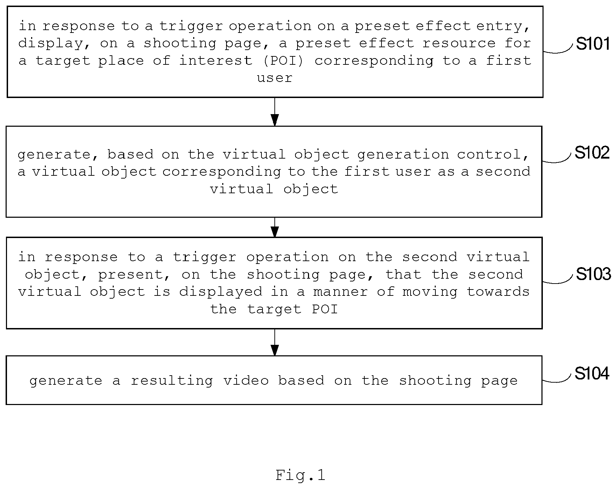

Based on this, some embodiments of the present disclosure provides a video generation method, by referring to Fig. 1, which is a flow diagram of a video generation method according to some embodiments of the present disclosure, the method comprising the following steps.

S101: in response to a trigger operation on a preset effect entry, displaying, on a shooting page, a preset effect resource for a target place of interest (POI) corresponding to a first user.

The preset effect resource comprises at least one first virtual object, the at least one first virtual object is displayed on the shooting page in a manner of moving towards the target POI, and the shooting page is provided with a virtual object generation control.

In some embodiments, the preset effect entry may be provided on the shooting page as one of effect resource entries presented on the shooting page. In response to receiving the trigger operation on the preset effect entry on the shooting page, the preset effect resource of the target POI corresponding to the first user is displayed on the shooting page. The preset effect resource may comprise an augmented reality (AR) effect resource and the like.

In some embodiments, the preset effect entry may also be an anchor point provided on a video playing page, and by clicking on the preset effect entry on the video playing page by the user, the shooting page is jumped to, and the preset effect resource for the target POI corresponding to the first user is displayed on the shooting page.

It should be noted that the preset effect entry in some embodiments of the present disclosure may be provided on any page, which is not limited in the embodiments of the present disclosure.

In some embodiments of the present disclosure, the target POI corresponding to the first user may comprise a target scenic spot, a target restaurant, a target playground, a target shopping mall, and the like corresponding to the first user. The target POI corresponding to the first user may refer to a closest POI to the first user, or a POI selected by the first user, and so on.

In some embodiments, in response to receiving a trigger operation on a preset effect entry, position information (e.g., GPS positioning information) of a first user (also referred to as a current user) is first determined, and based on the position information of the first user, a closest POI to the first user is determined as a target POI. Then, a preset effect resource corresponding to the target POI is obtained, for example, the preset effect resource corresponding to the target POI may be obtained from a content resource server, wherein the preset effect resource may comprise at least one first virtual obj ect, the first virtual obj ect may, for example, be a wishing lantern object, and the preset effect resource may further comprise a Milky Way effect resource, a name icon of the target POI, and the like. The preset effect resource for the target POI is an effect resource pre-configured based on a feature of the target POI, based on which, the user is enabled to be personally on the scene, so that the user immerses into the environmental atmosphere of the target POI in the process of shooting a video.

It should be noted that, on the premise of meeting the relevant laws and regulations, if it is determined that the current user is willing to use the video generation method according to the present disclosure and authorizes the use of the current user's position information, the embodiments of the present disclosure can obtain the position information of the user.

In the embodiments of the present disclosure, in response to receiving a trigger operation on a preset effect entry, a preset effect resource is displayed on a shooting page, for example, at least one first virtual object corresponding to a target POI is displayed on the shooting page, and based on position information of the target POI and position information of a first user, it is controlled that each first virtual object on the shooting page is displayed in a manner of moving towards the target POI.

In the embodiments of the present disclosure, the shooting page may further be provided with a virtual object generation control, for triggering, in response to the user clicking on the virtual object generation control, generating a virtual object corresponding to the first user, as a second virtual object.

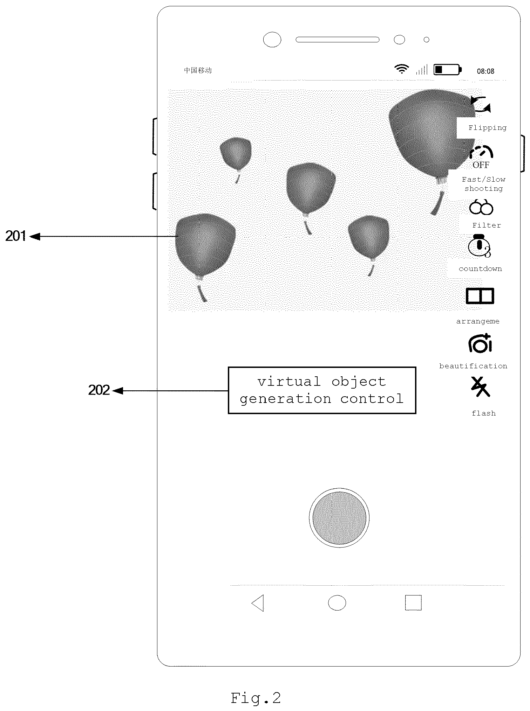

Referring to Fig. 2, a schematic diagram of a shooting page according to some embodiments of the present disclosure is provided, wherein at least one first virtual object 201 is displayed on the shooting page; in order to enrich the video shooting effect, other effects, such as a Milky Way effect, a central big wishing lantern effect, and the like, may also be displayed on the shooting page. In addition, the shooting page may be provided with a virtual object generation control 202.

In some embodiments of the present disclosure, the effect of the target POI presented on the shooting page shown in Fig. 2 can be fused with an image of the real world that is shot by a camera, for presentation on the same shooting page, so that a video shot based on the shooting page comprises not only the image of the real world but also the displayed shooting effect, such as an AR effect, enriching the shooting functions.

In some embodiments, in order to enrich the video shooting functions, the effect resource may also differently displayed for the first user on the shooting page, based on the distance between the first user and the target POI.

In a practical application, in response to the first user being in a far distance from the target POI, a preset first effect resource may be displayed for the first user, and in response to the first user being in a near distance from the target POI, a preset second effect resource can be displayed. The preset first effect resource and the preset second effect resource are different, for example, display effects of the preset first AR effect resource and the preset second AR effect resource may be set based on a specific situation.

For example, in response to a trigger operation on a preset effect entry, a target POI is determined for a first user from at least one POI, wherein a distance between the target POI and the first user is the closest; then, it is determined whether the distance between the first user and the target POI is less than a preset distance threshold. In response to determining that the distance between the first user and the target POI is not less than the preset distance threshold, a preset first effect resource is displayed on a shooting page; otherwise, a preset second effect resource is displayed on the shooting page. The preset first effect resource and the preset second effect resource are different preset effect resources.

In some embodiments, the preset first effect resource may comprise the at least one first virtual object; and the preset second or resource may comprise the at least one first virtual object and a fourth virtual object. The fourth virtual object may be a virtual object only displayed at a position closer to the target POI, such as a central big wishing lantern object.

In some embodiments, after displaying the preset first effect resource on the shooting page, in response to determining that the distance between the first user and the target POI is less than the preset distance threshold, a third virtual object may be additionally displayed based on the first effect resource already displayed on the shooting page. For example, based on the display of the first effect resource, the central big wishing lantern effect object is additionally displayed on the shooting page, so as to present a process of approaching the target POI.

In a practical application, in response to the first user going from a position where the distance from the target POI is greater than the preset distance threshold to a position where the distance from the target POI is less than the preset distance threshold, the dynamic effect of the third virtual object is additionally displayed on the shooting page based on the display of the preset first effect resource. The third virtual object and the fourth virtual object may be the same or different.

S102: generating, based on the virtual object generation control, a virtual object corresponding to the first user as a second virtual object.

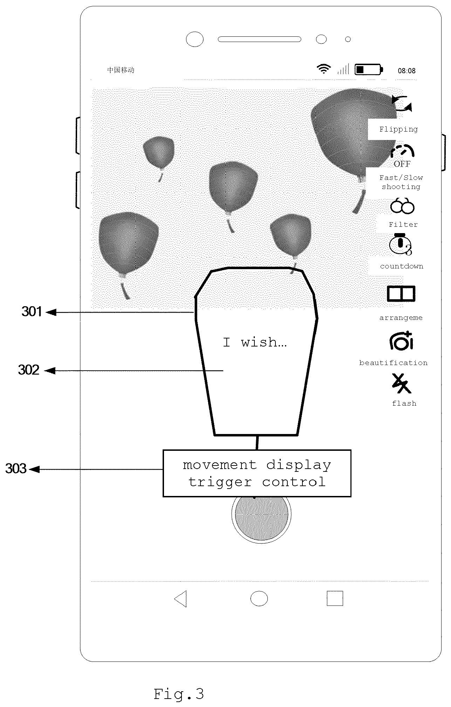

In the embodiments of the present disclosure, in response to receiving a trigger operation on the virtual object generation control on the shooting page, a virtual object template may be presented on the shooting page, wherein the virtual object template comprises an information input area. As shown in Fig. 3, which is a schematic diagram of another shooting page according to some embodiments of the present disclosure, wherein the shooting page has thereon presented a virtual object template 301, which comprises an information input area 302.

In a practical application, a user can call an input keyboard by clicking on an information input area in a virtual object template, and after information is input within the information input area by the input keyboard, based on the input information within the information input area, a virtual object is generated for the first user as a second virtual object, that is, a binding relationship is established between the second virtual object carrying the input information and the first user.

S103: in response to a trigger operation on the second virtual object, presenting, on the shooting page, that the second virtual object is displayed in a manner of moving towards the target POI.

In some embodiments, after the second virtual object has been generated based on the input information, in response to receiving a trigger operation on the second virtual object, an effect that the second virtual object is displayed on the shooting page in a manner of moving towards the target POI may be controlled. For example, assuming that the second virtual object is a wishing lantern object customized by the first user, the wishing lantern object customized by the first user may be controlled to be displayed in a manner of moving upward on the shooting page, so as to present an effect that the wishing lantern floats towards the target POI in a shooting image.

In some embodiments, the virtual object template presented on the shooting page also comprises a movement display trigger control, as shown in Fig. 3, the virtual object template 301 comprising a movement display trigger control 303. The user may trigger movement display of the second virtual object generated for the first user according to a preset trajectory by clicking on the movement display trigger control 303. Assuming that the second virtual object is a wishing lantern object customized by the first user, clicking on the movement display trigger control 303 by the user may trigger an effect that the wishing lantern object customized by the first user is lit and flown towards the target POI, presenting a more realistic process of lighting and flying the wishing lantern.

In some embodiments, in response to receiving a trigger operation on a target first virtual object in the at least one first virtual object displayed on the shooting page, input information bound to the target first virtual object may be presented on the shooting page, wherein the target first virtual object has a correspondence with a second user, and the second user has a correspondence with the target POI.

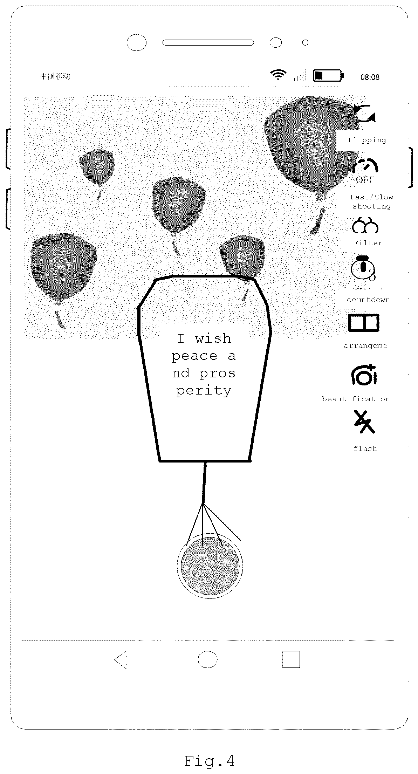

As shown in Fig. 4, which is a schematic diagram of another shooting page according to some embodiments of the present disclosure, wherein a target first virtual object 401 is presented on the shooting page, and the target first virtual object is bound with input information. Assuming that the target first virtual object is a wishing lantern object flown by the second user, in the embodiments of the present disclosure, a function that the user clicks on a wishing lantern object flown by another user to view a wish of the other user may be supported. The target first virtual object may be a wishing lantern object flown by the second user at a position where the target POI is located.

In some embodiments, after the input information bound to the target first virtual object is presented on the shooting page, movement display of the target virtual object towards the target POI may be controlled on the shooting page. For example, timekeeping may be started in response to presentation of the input information bound to the target first virtual object being started on the shooting page, and in response to the timekeeping reaching a preset duration, movement display of the target first virtual object towards the target POI on the shooting page is controlled. Assuming that the target first virtual object is a wishing lantern object flown by the second user, in response to the first user viewing the wishing lantern object flown by the second user, an effect that the wishing lantern object of the second user floats back to sky is displayed.

S104: generating a resulting video based on the shooting page.

Compared with the related art, the technical solution according to the embodiments of the present disclosure has at least the following advantages.

The embodiments of the present disclosure provides a video generation method, comprising: in response to receiving a trigger operation on a preset effect entry, displaying on a shooting page, a preset effect resource for a target POI corresponding to a first user, wherein the preset effect resource comprises at least one first virtual object, and the at least one first virtual object is displayed on the shooting page in a manner of moving towards the target POI; then, based on a virtual object generation control on the shooting page, generating a virtual object corresponding to the first user as a second virtual object, and in response to receiving a trigger operation on the second virtual object, presenting on the shooting page that, the second virtual object is displayed in a manner of moving towards the target POI, and then generating a resulting video based on the shooting page. It can be seen that, the embodiments of the present disclosure is capable of, presenting on a shooting page a preset effect resource for a target POI corresponding to a first user, and generating a virtual object for the user, and generating a resulting video based on a shooting effect presented on the shooting page, so that the video shooting functions are enriched.

In some embodiments, the preset effect resource for the target POI corresponding to the first user may be displayed in a shooting preview image of the shooting page, or in a shooting image of the shooting page.

In a practical application, in response to receiving a trigger operation on a shooting control on a shooting page, a video shooting is started, and in the process of the shooting, a first user may, based on a preset effect resource displayed on the shooting page, trigger generation of a second virtual object, an effect that the second virtual object generated for the first user is displayed on the shooting page in a manner of moving towards a target POI, and the like.

In response to receiving a re-trigger operation on the shooting control on the shooting page, the shooting of the video is finished, and a resulting video may be obtained. The resulting video not only comprises the shooting effect displayed on the shooting page, but also comprises an interaction process of the first user on the shooting page. For example, the resulting video not only has therein displayed the wishing lantern displayed on the shooting page, but also comprises the process that the first user customizes and fly the wishing lantern, and in addition, the resulting video may also comprise the process that the first user views the wish in the wishing lantern flown by the other user, and the like.

In the video generation method according to the embodiments of the present disclosure, in response to receiving a trigger operation on a preset effect entry, a preset effect resource for a target POI corresponding to a first user is displayed on a shooting page, wherein the preset effect resource comprises at least one first virtual object. Then, based on a virtual object generation control on the shooting page, a virtual object corresponding to the first user is generated as a second virtual object, and in response to receiving a trigger operation on the second virtual object, the second virtual object is displayed on the shooting page in a manner of moving towards the target POI, and then a resulting video is generated based on the shooting page. It can be seen that, the embodiments of the present disclosure is capable of, presenting on a shooting page a preset effect resource for a target POI corresponding to a first user, and generating a second virtual object for the user, and generating a resulting video based on an AR effect presented on the shooting page, so that the video shooting functions are enriched.

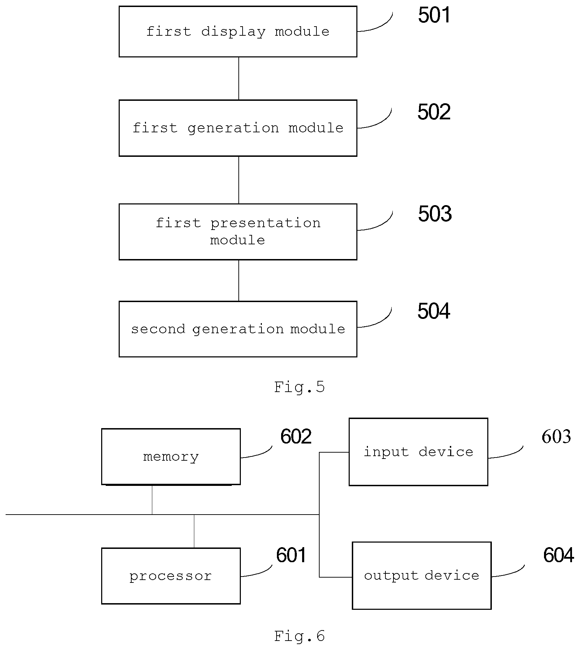

Based on the same inventive concept as the above embodiment, some embodiments of the present disclosure further provides a video generation apparatus, referring to Fig. 5, which is a schematic structural diagram of a video generation apparatus according to some embodiments of the present disclosure, the apparatus comprising:
a first display module 501 configured to, in response to a trigger operation on a preset effect entry, display, on a shooting page, a preset effect resource for a target place of interest (POI) corresponding to a first user, wherein the preset effect resource comprises at least one first virtual object, the at least one first virtual object is displayed on the shooting page in a manner of moving towards the target POI, and the shooting page is provided with a virtual object generation control;
a first generation module 502 configured to, generate, based on the virtual object generation control, a virtual object corresponding to the first user as a second virtual object;
a first presentation module 503 configured to, in response to a trigger operation on the second virtual object, present, on the shooting page, that the second virtual object is displayed in a manner of moving towards the target POI; and
a second generation module 504 configured to generate a resulting video based on the shooting page.

In some embodiments, the first generation module comprises:
a first presentation sub-module configured to, in response to a trigger operation on the virtual object generation control, present a virtual object template on the shooting page, wherein the virtual object template comprises an information input area; and
a first generation sub-module configured to, after input information within the information input area has been received, based on the input information, generate the virtual object corresponding to the first user as the second virtual object.

In some embodiments, the apparatus further comprises:
a second presentation module configured to, in response to a trigger operation on a target first virtual object in the at least one first virtual object, present, on the shooting page, input information bound to the target first virtual object, wherein the target first virtual object has a correspondence with a second user, and the second user has a correspondence with the target POI.

In some embodiments, the apparatus further comprises:
a first control module configured to control, on the shooting page, that the target first virtual object is displayed in a manner of moving towards the target POI.

In some embodiments, the preset effect resource comprises a preset first effect resource and a preset second effect resource; and the first display module comprises:
a first determination sub-module configured to, in response to the trigger operation on the preset effect entry, determine, for the first user, a target POI from at least one POI, wherein a distance between the target POI and the first user is the closest;
a second determination sub-module configured to determine whether the distance between the first user and the target POI is less than a preset distance threshold; and
a first display sub-module configured to, if it is determined that the distance between the first user and the target POI is not less than the preset distance threshold, display the preset first effect resource on the shooting page; otherwise, display the preset second effect resource on the shooting page, wherein the preset first effect resource and the preset second effect resource are different preset effect resources.

In some embodiments, the apparatus further comprises:
a second display sub-module configured to, when it is determined that the distance between the first user and the target POI is less than the preset distance threshold, additionally display a third virtual object on the shooting page, wherein the third virtual object belongs to the preset second effect resource.

In some embodiments, the preset first effect resource comprises the at least one first virtual object; and the preset second effect resource comprises the at least one first virtual object or a fourth virtual object.

In the video generation apparatus provided by the embodiments of the present disclosure, when a trigger operation on a preset effect entry has been received, a preset effect resource for a target POI corresponding to a first user is displayed on a shooting page, wherein the preset effect resource comprises at least one first virtual object, and the at least one first virtual object is displayed on the shooting page in a manner of moving towards the target POI. Then, on the bases of a virtual object generation control on the shooting page, a virtual object corresponding to the first user is generated as a second virtual object, and when a trigger operation on the second virtual object has been received, it is presented on the shooting page that the second virtual object is displayed in a manner of moving towards the target POI, and then a resulting video is generated based on the shooting page. It can be seen that, the embodiments of the present disclosure is capable of, presenting on a shooting page a preset effect resource for a target POI corresponding to a first user, and generating a second virtual object for the user, generating a resulting video based on the shooting effect presented on the shooting page, so that the video shooting functions are enriched.

In addition to the above method and apparatus, some embodiments of the present disclosure further provides a computer-readable storage medium having therein stored instructions which, when run on a terminal device, cause the terminal device to implement the video generation method according to the embodiments of the present disclosure.

Some embodiments of the present disclosure further provides a computer program product, comprising a computer program/instructions which, when executed by a processor, implement the video generation method according to the embodiments of the present disclosure.

In addition, some embodiments of the present disclosure further provides a video generation device, which may, as shown in Fig. 6, comprise:
a processor 601, a memory 602, an input device 603, and an output device 604. The number of the processor 601 in the video generation device may be one or more, and one processor is taken as an example in Fig. 6. In some embodiments of the present disclosure, the processor 601, the memory 602, the input device 603 and the output device 604 may be connected by a bus or in other ways, and the connection by the bus is taken as an example in Fig. 6.

The memory 602 may be configured to store software programs and modules, and the processor 601 may perform various functional applications and data processing of the video generation device by running the software programs and modules stored in the memory 602. The memory 602 may mainly comprise a program storage area and a data storage area, wherein the program storage area may have therein stored an operating system, an application required for at least one function, and the like. Furthermore, the memory 602 may comprise a high speed random access memory, and may also comprise a non-volatile memory, such as at least one magnetic disk storage device, flash memory device, or other volatile solid-state storage devices. The input device 603 may be configured to receive input numeric or character information and generate signal inputs related to user settings and function controls of the video generation device.

In this embodiment, the processor 601 can load an executable file corresponding to a process of one or more applications into the memory 602 according to the following instructions, and the applications stored in the memory 602 is run by the processor 601, thereby implementing various functions of the above video generation device.

It should be noted that, relational terms such as "first" and "second", herein, are only used for distinguishing one entity or operation from another entity or operation without necessarily requiring or implying any such actual relation or order between these entities or operations. Moreover, the term "comprise", "comprise", or any other variation thereof, is intended to encompass a non-exclusive inclusion, such that a process, method, article, or device comprising a list of elements not only comprises those elements but also comprises other elements not expressly listed, or also comprises elements inherent to such a process, method, article, or device. Without more limitations, an element defined by a statement "comprising a ..." does not exclude the presence of another identical element in a process, method, article, or device that comprises the element.

The above only describes the specific implementations of the present disclosure, which enable those skilled in the art to understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to these embodiments described herein, but conform to the widest scope consistent with the principles and novel features disclosed herein.

## Claims

1. A video generation method, comprising:
displaying, on a shooting page, a preset effect resource for a target place of interest (POI) corresponding to a first user, in response to a trigger operation on a preset effect entry, wherein the preset effect resource comprises at least one first virtual object, the at least one first virtual object is displayed on the shooting page in a manner of moving towards the target POI, and the shooting page is provided with a virtual object generation control;
generating, based on the virtual object generation control, a virtual object corresponding to the first user as a second virtual object;
presenting, on the shooting page, that the second virtual object is displayed in a manner of moving towards the target POI, in response to a trigger operation on the second virtual object; and
generating a resulting video based on the shooting page.

2. The video generation method according to claim 1, wherein the generating, based on the virtual object generation control, the virtual object corresponding to the first user as the second virtual object, comprises:
presenting a virtual object template on the shooting page, in response to a trigger operation on the virtual object generation control, the virtual object template comprising an information input area; and
generating, in response to receiving input information within the information input area, the virtual object corresponding to the first user as the second virtual object, based on the input information.

3. The video generation method according to claim 1, further comprising, before the generating the resulting video based on the shooting page:
presenting, in response to a trigger operation on a target first virtual object in the at least one first virtual object, input information bound to the target first virtual object on the shooting page, the target first virtual object having a correspondence with a second user, and the second user having a correspondence with the target POI.

4. The video generation method according to claim 3, further comprising, after the presenting the input information bound to the target first virtual object on the shooting page:
controlling, on the shooting page, that the target first virtual object is displayed in a manner of moving towards the target POI.

5. The video generation method according to claim 1, wherein the displaying, on the shooting page, the preset effect resource for the target place of interest (POI) corresponding to the first user, in response to the trigger operation on the preset effect entry, comprises:
determining, for the first user, the target POI from at least one POI, in response to the trigger operation on the preset effect entry, a distance between the target POI and the first user being the closest;
determining whether the distance between the first user and the target POI is less than a preset distance threshold; and
displaying a preset first effect resource on the shooting page, in response to determining that the distance between the first user and the target POI is not less than the preset distance threshold; otherwise, displaying a preset second effect resource on the shooting page, the preset first effect resource and the preset second effect resource being different preset effect resources.

6. The video generation method according to claim 5, further comprising, after the displaying the preset first effect resource on the shooting page:
additionally displaying a third virtual object on the shooting page, in response to determining that the distance between the first user and the target POI is less than the preset distance threshold, the third virtual object belonging to the preset second effect resource.

7. The video generation method according to claim 5, wherein the preset first effect resource comprises the at least one first virtual object, and the preset second effect resource comprises the at least one first virtual object or a fourth virtual object.

8. A video generation apparatus comprising:
a first display module configured to display, on a shooting page, a preset effect resource for a target place of interest (POI) corresponding to a first user, in response to a trigger operation on a preset effect entry, wherein the preset effect resource comprises at least one first virtual object, the at least one first virtual object is displayed on the shooting page in a manner of moving towards the target POI, and the shooting page is provided with a virtual object generation control;
a first generation module configured to generate, based on the virtual object generation control, a virtual object corresponding to the first user as a second virtual object;
a first presentation module configured to present, on the shooting page, that the second virtual object is displayed in a manner of moving towards the target POI, in response to a trigger operation on the second virtual object; and
a second generation module configured to generate a resulting video based on the shooting page.

9. A computer-readable storage medium having therein stored instructions which, when run on a terminal device, cause the terminal device to implement a video generation method according to any of claims 1-7.

10. A video generation device comprising: a memory, a processor, and a computer program stored on the memory and executable on the processor, the processor, when executing the computer program, implementing a video generation method according to any of claims 1-7.

11. A computer program product, comprising a computer program/instructions which, when executed by a processor, implement the video generation method according to any of claims 1-7.

12. A computer program, comprising:
instructions which, when executed by a processor, cause the processor to perform the video generation method according to any of claims 1-7.
